# EUROPEAN PATENT SPECIFICATION

(11) **EP 0 836 028 B1**
(45) Date of publication and mention of the grant of the patent: **15.09.2004**
(21) Application number: 97117416.4
(22) Date of filing: 08.10.1997
(51) Int. Cl.: F16D 51/24, F16D 65/56, F16D 51/56, F16D 65/58

(54) **Drum brake device**
Trommelbremse
Frein à tambour

(30) Priority: 08.10.1996 JP 28612396
(43) Date of publication of application: 15.04.1998
(73) Proprietor: Nisshinbo Industries, Inc., Chuo-ku, Tokyo 103-0013 (JP)
(72) Inventor: Asai, Seiji, Okazaki-shi, Aichi 444 (JP); Kobayashi, Yasushi, c/o Nisshinbo Ind. Inc. Nagoya, Nagoya-shi, Aichi 457 (JP)
(74) Representative: Thinat, Michel

(56) References cited:
- EP-A- 0 800 014
- EP-A- 0 836 027
- FR-A- 2 697 600
- GB-A- 2 194 300
- US-A- 3 575 266
- US-A- 4 364 456
- US-A- 4 387 792
- US-A- 5 360 086

## Description

The present invention relates to a drum brake, more specifically to a dual mode type drum brake which functions as a leading-trailing (LT) type when the service brake is applied and as a duo-servo (DS) type when the parking brake is applied.

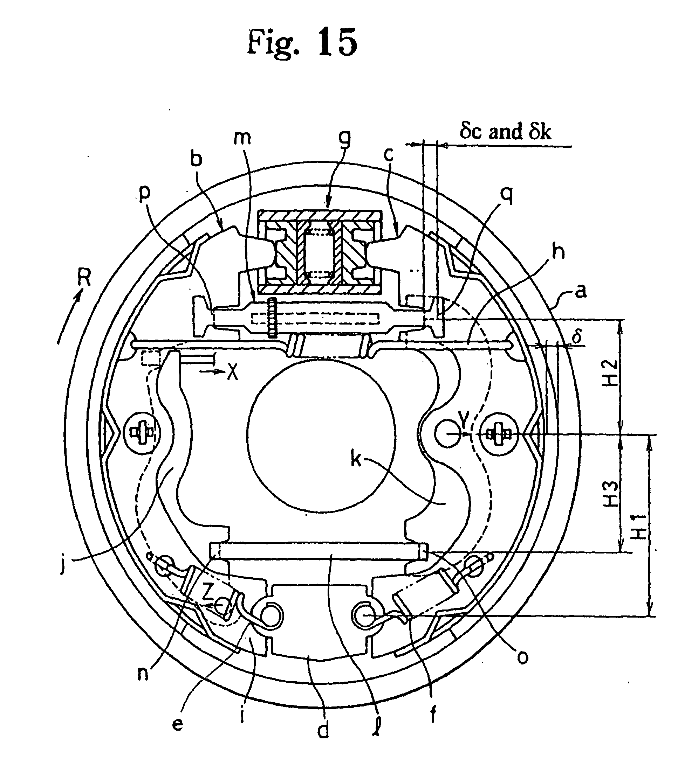

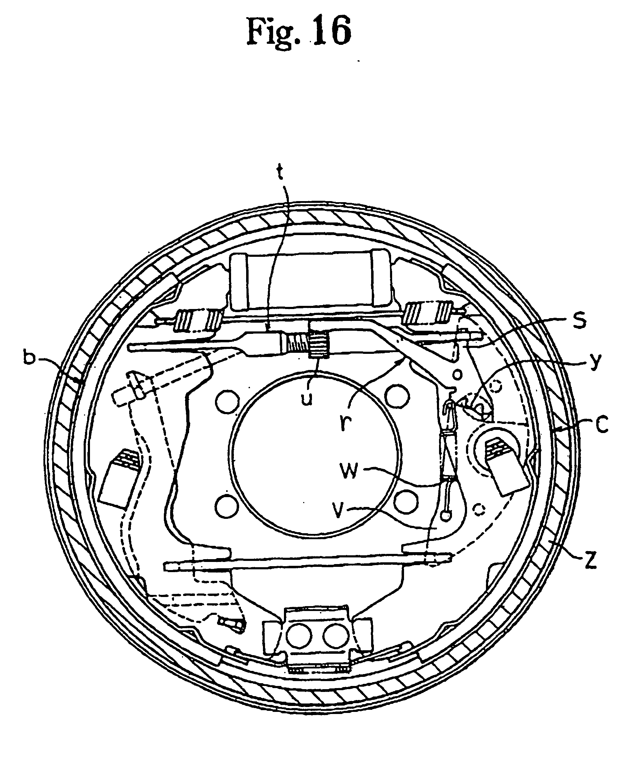

A drum brake of this type is disclosed in Australian patent number AU-B1-53 491/79, and in the U.S. patent number US-A-5,275,260. The basic functions of these drum brake devices are the same and will be explained with reference to Fig. 15.

A pair of brake shoes b, c are arranged on a back plate a. The respective adjacent lower ends of each brake shoe b, c engage with an anchor block d while two coiled return springs e, f urge the adjacent ends in the direction toward the anchor block d. A hydraulic cylinder (service brake actuator) g is disposed between and engaged with the upper ends of the respective brake shoes b, c for applying a hydraulic pressure. A return spring h provides a force urging the two brake shoes b, c in the direction toward one another.

The prior art of Fig. 15 also includes a brake lever j pivoted at one (lower) end i of the brake shoe b. When pivoted in the clockwise direction, the brake lever j urges the first connector rod (strut) l into engagement with an idler lever (idler link) k. The idler lever k is mounted to pivot on the brake shoe c. The first connector rod l engages with the brake lever j at one end n thereof and engages with the idler lever k at the other end o thereof. A second connector rod (shoe clearance adjustment device) m engages with the brake shoe b at one end p thereof and also engages with both an upper end of the idler lever k and the brake shoe c at the other end q thereof.

The operation of the brake is explained as follows. When the driver steps on the brake pedal, the hydraulic cylinder g is pressurized. The two brake shoes b, c spread open while being abutted to the anchor block d as the fulcrum, thereby frictionally engaging the rotating brake drum (not shown) in a leading-trailing braking action.

When the parking brake is applied, a free end of the brake lever j is urged in the direction of the arrow X. The force of this action is transferred in sequence to the first connector rod l, the idler lever k, the second connector rod m and the one brake shoe (second brake shoe) b. The brake shoe b moves about its point of abutment with the anchor block d and frictionally engages the brake drum. At the same time, the idler lever is urged outwardly being abutted against the second connector rod m as the fulcrum. The idler lever k urges the other brake shoe (first brake shoe) c outwardly at its pivot point in the direction of the arrow Y to frictionally engage the brake drum. Additionally, a reactive force of the brake lever j arises in the direction of the arrow Z at the lower end i of the one brake shoe b.

If at this time, the brake drum is rotating in the direction of the arrow R, the frictional force on the one brake shoe b is transferred to the second connector rod m. The other end q of the rod m presses against the other brake shoe c, which is supported by the anchor block d, giving rise to the duo-servo braking action. If the brake drum rotates in the direction opposite to the arrow R, the frictional force on the other brake shoe c is transferred to the second connector rod m. One end p of the rod m is then pressed against the one brake shoe b, which is supported by the anchor block d, resulting in the same duo-servo braking action as above.

As is evident from this parking brake operation, when the other end q of the second connector rod m abuts the idler lever k and a gap arises between the other end q and the other brake shoe c, then the piston of the hydraulic cylinder g extends by an amount equivalent to the gap. This is the case when the brake drum rotates in the opposite direction of the arrow R. As a result, the, brake pedal retracts which is not only disconcerting to the driver but also the pedal stroke increases for the next brake application. Conversely, if the other end q of the second connector rod m abuts against the other brake shoe c and a gap exists between the other end q and the idler lever k, then the stroke of the brake lever j increases by an amount equivalent to this gap. This causes the stroke required in operating the hand brake lever (not shown) to increase. It would clearly be preferable that the gap between the other end q of the second connector rod m with either the other brake shoe c or the idler lever k should be as small as possible.

Fig. 16 illustrates an automatic shoe clearance device as disclosed in US-A-5,275,260. A base end y of an adjustment lever r is pivotally mounted on the shoe web of the brake shoe c, while an upper arm s is engaged in a notched groove of an upper strut t. Another arm engages with a star wheel (toothed adjustment wheel) u on the upper strut t. An adjustment spring w mounted between the adjustment lever r and an idler lever v urges the adjustment lever r in the counter-clockwise direction with the base end y as the fulcrum. When the brake linings become worn causing the two brake shoes b, c to open more than a prescribed value, the another arm causes the star wheel u to rotate. This rotation automatically increases the entire length of the upper strut t thereby maintaining a constant clearance between the brake shoes b, c and a brake drum z.

The devices described above have the following points that need to be improved.
1. When the idler lever k or v is pivoted to rotate on the other brake shoe c, it is very difficult to always check proper alignment of the components.
2. When the brake lever j is pulled, the two brake shoes b and c, at both the upper and lower ends, move apart. The upper ends of the brake shoes b, c can move away from the hydraulic cylinder g, while the lower ends of the brake shoe b, c move away from the anchor block d. If the parking brake is applied, when the wheels are in slight rotation, the brake drum will lock with the spread apart the brake shoes b, c, and the entire mechanism will rotate together until one or the other brake shoe contacts the anchor block d. This will have the effect that one of the brake shoes b, c will collide against the anchor block d producing a noise which is disconcerting to the driver. In addition, since the impact load of the brake shoe against the anchor block d may diminish the structural strength of the components, stronger but heavier materials are used in the conventional brakes.
3. The adjacent ends of the brake shoes b, c of the conventional brakes, when the brake lever j is not set in its return position precisely, will be separated from the anchor block d even if the brake is not operated. Therefore, the brake shoes b, c may slightly but undesirably move in the drum upon the operation of the vehicle. The movement may cause unusual dragging between the lining and the brake drum and/or may have the brake shoe to bite the brake drum resulting in the wheel being locked.
4. In the conventional device such as AU-B1-53 491/79 an undesirable effect is the play generated when pressure is applied to the service brake by actuating the hydraulic cylinder g. The upper adjacent ends of the brake shoes b, c move apart. At this time, the idler lever k and the connector rod l, m can vibrate when the vehicle is in motion and generate a disturbing noise. This noise can also be disconcerting to the driver of the motor vehicle.
5. As the lining of the brake shoe c gradually wears, there is a gradual shift in the point at which the second connector rod m engages with the brake shoe c or the idler lever k. This is shown in Fig. 15, where the amount of displacement δ of the brake shoe c at the pivot point of the brake shoe c and idler lever k and the amount of displacement δc and δk of the brake shoe c and the idler lever k at the point of engagement with the second connector rod m is defined as follows:$\text{Formula (1)} \text{Brake shoe displacement δc = (H1+H2)/H1×δ}$$\text{Formula (2)} \text{Idler lever k displacement δk = (H2+H3)/H3×δ,}$ where
   - H1 :: Distance from the anchor block d to the pivot point of brake shoe c and idler lever k
   - H2 :: Distance from the pivot point of the brake shoe c and idler lever k to the second connector rod m
   - H3 :: Distance from the pivot point of the brake shoe c and idler lever k to the first connector rod l
   - δ :: Amount of lining wear at the pivot point of the brake shoe c and idler lever k

In the present case, H3 is considerably smaller than H1, so that the displacement δk of the idler lever k will be considerably larger than the displacement δc of the brake shoe c. Thus in the conventional device of US-A-5,275,260, as the lining wears, the brake shoe c on which the adjustment lever r is pivoted moves about the anchor block as the fulcrum, while the idler lever v moves about the lower strut as its fulcrum. This changes the biasing force of the adjustment spring w which urges the adjustment lever r. A negative effect results on the automatic adjustment process when only a very small adjustment is required.

It is therefore an object of the present invention to avoid the above-mentioned drawbacks by providing a stable leading-trailing type service brake combined with a highly effective duo-servo type parking brake having an automatic shoe clearance mechanism which functions accurately over a prolonged period of time, in which no disconcerting noises are generated, in which no undesirable impact loads are applied to the brake components thus also enabling a lighter device, and in which the drum brake prevents unusual dragging occurring between the lining and the brake drum and/or prevents the brake shoe biting the brake drum resulting in the wheel being locked.

According to the present invention, a drum brake device is provided as defined in claim 1. Other features of the invention are defined in the dependant claims 2 to 5.

The present invention as described above provides the following advantages.

By regulating the direction in which the idler link can rotate with respect to the brake shoe, its engagement point with the shoe clearance adjustment device can be easily checked by visual inspection when assembling the link and the brake shoe.

The adjustment spring and other components of the automatic adjustment mechanism for the automatic shoe clearance adjustment device all move together with the brake shoe. This ensures a constant clearance between the brake drum and the brake shoes, even with increased wear of the linings.

The ends of the brake shoes on the anchor block side can be prevented from opening solely and easily by a proper setting of the mounted load of the shoe return springs and their positions.

The drum brake device of the present invention ensures that the brake shoes do not separate from the anchor block even when the parking brake is applied. Consequently, no noise is generated and the discomfort or anxiety of the driver is eliminated. This applies as well when a torque is generated on the brake shoes by the brake drum. Moreover, the undesirable impact of the brake shoes against the anchor block can be avoided, which allows the material strength of the components to be lessened, making the device on the whole lighter.

The adjacent ends of the brake shoes will not be separated from the anchor block even in the situation that the brake lever is not set in its return position precisely, thereby preventing unusual dragging occurring between the lining and brake drum and/or preventing the brake shoe biting the brake drum resulting in the wheel being locked.

The invention is also applicable to other component configurations. For example, an incremental or one-shot type automatic shoe clearance adjustment device can be used. In addition, a forward-pull or a cross-pull type parking brake device can be utilized. Further objects and advantages of the present invention will become apparent in the following discussion of embodiments in conjunction with the drawings, in which:
- Fig. 1: is a plan view of a drum brake device according to one example of first embodiment of the invention;
- Fig. 2: is a cross-sectional view of the example of Fig. 1 taken along the line II-II;
- Fig. 3: is a cross-sectional view of the example of Fig. 1 taken along the line III-III;
- Fig. 4: is a cross-sectional view of the example of Fig. 1 taken along the line IV-IV;
- Fig. 5: is a cross-sectional view of the example of Fig. 1 taken along the line V-V;
- Fig. 6: illustrates a modified arrangement of the pivotal mounting of the idler link to the brake shoe;
- Fig. 7: is a plan view of a drum brake device according to another example of the first embodiment of the present invention;
- Fig. 8: is a cross-sectional view of the example of Fig. 1 taken along the line VIII-VIII;
- Fig. 9: is a plan view of a drum brake device according to one example of second embodiment of the present invention;
- Fig. 10: is a cross-sectional view of the example of Fig. 9 taken along the line X-X;
- Fig. 11: is a plan view of a drum brake device according to another example of the second embodiment of the present invention;
- Fig. 12: is a plan view of a still further exapmle of the first embodiment of the present invention;
- Fig. 13: is a cross-sectional view of the example of Fig. 12 taken along the line XIII-XIII;
- Fig. 14: is a cross-sectional view of the example of Fig. 12 taken along the line XIV-XIV;
- Fig. 15: is a plan view of a conventional drum brake device as disclosed in Australian patent number AU-B1-53 491/79;
- Fig. 16: is a plan view of a conventional drum brake device as disclosed in US-A-5,275,260;

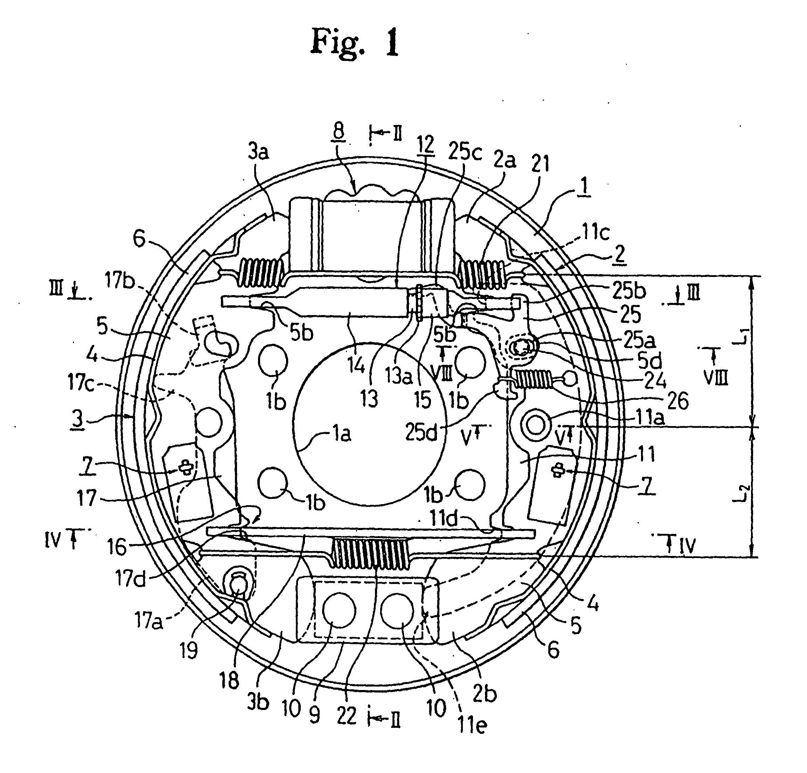

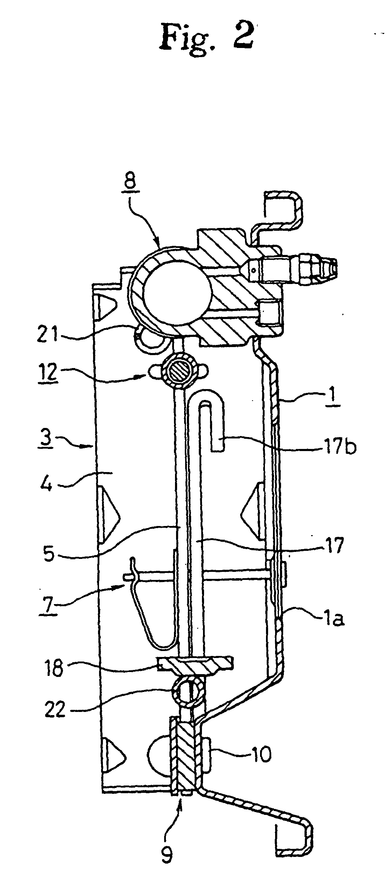

A first embodiment of the present invention will be explained in conjunction with Example 1 of Figs. 1 to 6. Fig. 1 illustrates a back plate 1 having a central hole 1a freely mountable on a vehicle axle. The back plate 1 is secured to a stationary part of the vehicle by four bolts inserted through the bolt holes 1b. Two brake shoes 2, 3 are disposed opposite one another, each configured as a shoe rim 4 and a shoe web 5 joined to form a "T" in cross-section. A lining 6 is affixed around the outer surface of each shoe rim 4. Braking force is generated because of urging the linings 6 against a brake drum (not shown in the figure). Each brake shoe 2, 3 is mounted on the back plate 1 by a holding mechanism 7 as shown in Fig. 2, which includes a plate spring and pin as is known per se.

A service brake actuator 8 is disposed between a pair of adjacent first ends 2a, 3a of the brake shoes 2, 3. The actuator 8 is secured to the back plate 1 with bolts or other securing means. The service brake actuator 8 comprises a hydraulic wheel cylinder known in the art, however which may also be an air actuated wheel cylinder.

An anchor block 9 is disposed between a pair of adjacent second ends 2b, 3b of the brake shoes 2, 3. The anchor block 9 is secured to a raised portion of the back plate 1 by rivets 10 shown in Fig. 2. The anchor block 9 can alternatively be welded to the back plate 1. Moreover, an anchor pin can be used in place of the rectangular plate shown in Figs. 1 and 2. In either case, the anchor means must be adapted to support and engage with each of the second ends 2b, 3b of the brake shoes 2, 3.

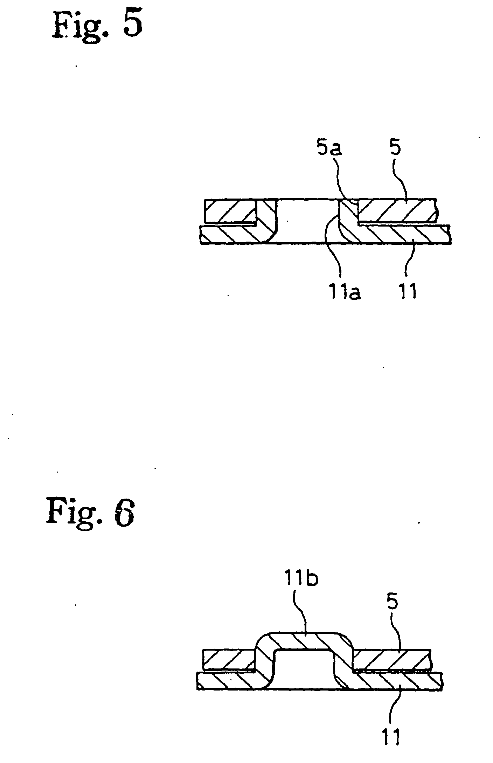

An elongated idler link 11 is pivotally mounted to the shoe web 5 of the first brake shoe 2 in an overlapping manner as seen in Fig. 1. As seen in Fig. 5, the idler link 11 comprises a protuberance 11a which is formed as a burr with a press. The protuberance 11a is formed in a central region of the link 11 and passes into a hole 5a provided in the shoe web 5. The arrangement provides a pivotal connection.

The idler link 11 comprises first and second ends having notched grooves 11c, 11d formed therein in Fig. 1. The lower segment of the link 11 extends from the notched groove 11d and comprises an end face 11e arranged to abut against the anchor block 9.

Fig. 5 illustrates the configuration of the protuberance 11a, while Fig. 6 shows an alternative means for the pivotal mounting employing a protuberance 11b formed as drawing with a press. Alternatively, a protuberance can be formed on the shoe web 5 in a hole formed in the idler link 11 or a separate pin can be used for the pivotal mounting of the idler link 11.

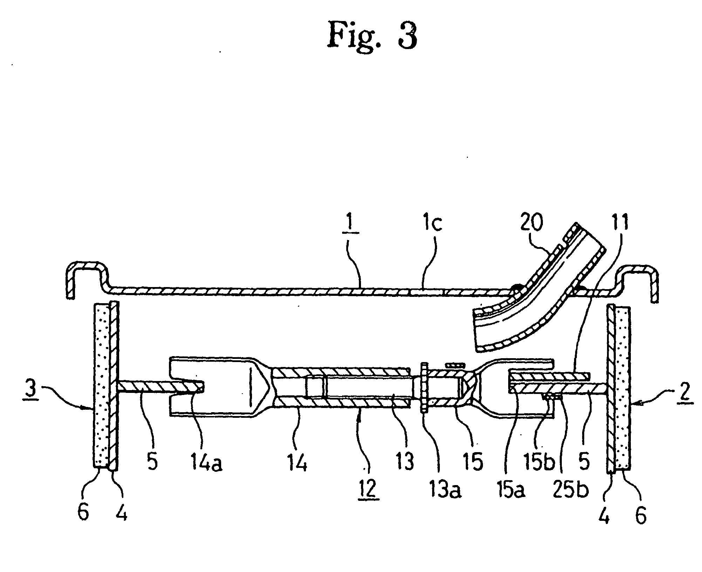

A shoe clearance adjustment device 12 allows adjustment of the clearance between the brake drum (not shown) and the lining 6 of the respective brake shoes 2, 3. The adjustment device shown in Figs. 1 and 3 can allow automatic clearance adjustment, to be described later (Example 3). For manual adjustment, a screwdriver can be inserted into a hole 1c provided in the back plate 1 or a hole provided in the brake drum. By this means, a toothed adjustment wheel 13a shown in Figs. 1 and 3 can be turned. The wheel 13a is integrally formed with a bolt 13. By rotation of the adjustment wheel 13a into or out of a tube segment 14, the length of the adjustment device 12 can be set.

As best seen in Fig. 3, a socket 15 rotationally supports one end of the bolt 13. Each end of the shoe clearance adjustment device 12 is provided with a plate extending in the direction of the respective brake shoe 2, 3. Each of the plates is provided with a notched groove 14a, 15a.

The bottom section of the notched groove 14a engages with a cooperating notched groove 5b formed into the shoe web 5 of the second brake shoe 3. The bottom of the notched groove 15a engages with the bottom of a notched groove 5b formed into the shoe web 5 of the first brake shoe 2 and the cooperating notched groove 11c disposed on the end of the idler link 11 as seen in Figs. 1 and 3. In practice however, there will be a small gap at the bottom of the notched groove 11c of the idler link 11. The gap results from the cumulative effect of the tolerances in fabricating the brake shoe 2, the link 11 and their mounting components.

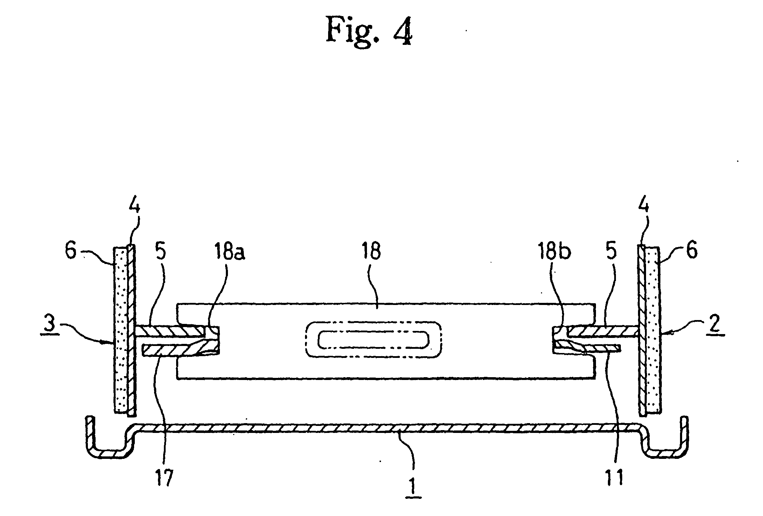

A parking brake actuator means 16 is comprised of a forward-pull type brake lever 17, a strut 18, and other components shown in Fig. 1 and Fig. 4. When a parking brake is applied by a vehicle driver, the brake lever 17 is pulled forward, i.e. moved in the clockwise direction as seen in Fig. 1. The brake lever 17 is disposed substantially parallel and overlapping with the shoe web 5 of the second brake shoe 3. Its base end 17a is pivotally mounted via a pin 19 at the second end 3b of the second brake shoe 3. A parking brake cable (not shown) is connected to a U-shaped groove at a free end 17b of the brake lever 17. A stopper 17c abuts against the inner face of the shoe rim 4 and regulates the return position of the brake lever 17 when the parking brake is not applied. The brake lever 17 engages with the strut 18 having notched grooves 18a, 18b provided on respective end as shown in Fig. 4. The bottom of the notched groove 18a engages with the bottom of a notched groove 17d of the brake lever 17.

Similarly, the bottom of the notched groove 18b engages with the bottom of the notched groove 11d provided on the end of the idler link 11 with a minimum gap. This gap arises due to tolerances in fabricating the brake lever 17, the strut 18 and their mounting components. The gap can be absorbed when assembling and adjusting the parking brake cable (not shown). As shown in Fig. 3, a tubular member 20 serves as an outer casing for guiding the parking brake cable for attachment to the brake lever 17. The tubular member 20 is secured to the back plate 1 in this Example 1.

As shown in Fig. 1, a first return spring 21 is provided adjacent to the service brake actuator 8, which is stretched apart when the actuator 8 forces the brake shoes outwardly. The return spring 21 is attached to and tensioned between the first ends 2a, 3a of the brake shoes 2, 3. In this Example 1, a second return spring 22 is provided adjacent to the anchor block 9, which is tensioned between the second ends 2b, 3b of the brake shoes 2, 3. The mounted loads of the return springs 21, 22 are set such that the second ends 2b, 3b of the brake shoes 2, 3 are held in engagement with the anchor block 9, i.e. do not spread apart. More particularly, the torque adjusted by arranging the force of the second return spring 22 and the distance from the pivot point of the brake shoe 2 with the idler link 11 to the second return spring 22, is greater than the torque adjusted by arranging the force of the first return spring 21 and the distance from the pivot point of the brake shoe 2 with the link 11 to the first return spring 21.

The desired return force can also be expressed using a further parameter of the drum brake system, namely the distance L1 and L2 of the first return spring 21 and the second return spring 22 from the pivot point (protuberance 11a) on the first brake shoe 2 as shown in Fig. 1. The return action of the springs is then expressed in terms of torque about the pivot point by the following relationship:$\text{F1 × L1 < F2 × L2,}$ wherein,
- F1:: Mounted load of the first return spring 21;
- F2:: Mounted load of the second return spring 22;
- L1:: Distance from the pivot point of brake shoe 2 with idler link 11 to the first return spring 21;
- L2:: Distance from the pivot point of brake shoe 2 with idler link 11 to the second return spring 22.

The operation of the brake device according to this Example 1 will now be discussed. When the driver depresses the brake pedal (not shown), the service brake actuator 8 is pressurized forcing the first ends 2a, 3a of the brake shoes 2, 3 to spread apart. The second ends 2b, 3b of the brake shoes 2, 3 engage with the anchor block 9 as a fulcrum during this movement. The movement forces the lining 6 of the brake shoes 2, 3 against the interior surface of the rotating brake drum (not shown), whereby the generated friction produces the braking force on the wheels of the vehicle. At this time, one of the brake shoes has a self-servo function, depending on the rotation direction, while the other does not. Hence, the brake device functions as a leading-trailing type.

Next the operation of the parking brake is explained in conjunction with Example 1 shown in Fig. 1. For example, when the hand brake lever (not shown) is operated, the free end 17b of the brake lever 17 is caused to move to the right in Fig. 1 by means of the parking brake cable (not shown). The brake lever 17 turns clockwise about the pin 19 mounted to the base end 17a. With the clockwise movement, the lever 17 engages the strut 18 and forces it to the right in the figure. The strut 18 engages with the notched groove 11d of the idler link 11, which produces counter-clockwise movement of the link 11 about its protuberance 11a. The counter-clockwise movement of the link 11 transmits a force to the notched groove 5b of the second brake shoe 3 via the shoe clearance adjustment device 12. The transmitted force causes the first end 3a of the second brake shoe 3 to move, thereby pressing the lining 6 against the brake drum. The second end 3b of the second brake shoe 3 acts as a fulcrum, being engaged with the anchor block 9.

Moreover, when the hand brake lever (not shown) is operated, the idler link 11 turns counter-clockwise direction about the notched groove 11c engaging with the right end of the shoe clearance adjustment device 12 as seen in Fig. 1.

The action transmits a force to the hole 5a in the first brake shoe 2 via the protuberance 11a.

As mentioned above, the torque F2 × L2 is larger than the torque F1 × L1.

Thus the force transmitted to the hole 5a causes the first brake shoe 2 to open at its first end 2a, while its second end 2b acts as the fulcrum, being engaged with the anchor block 9.

If at the time of applying the parking brake, a clockwise torque is acting on the brake drum, then the force applied to the second brake shoe 3 by means of friction is transferred to the first brake shoe 2 via the shoe clearance adjustment device 12. The second end 2b of the brake shoe 2 is then supported by the anchor block 9 to generate the braking force of the parking brake. Hence, the drum brake device functions as a duo-servo type in which both brake shoes 2, 3 have a self-servo function. If when the parking brake is applied, a torque is acting in the counter-clockwise direction on the brake drum, then the force applied to the first brake shoe 2 by means of friction is transferred to the second brake shoe 3 via the shoe clearance adjustment device 12. The second end 3b of the second brake shoe 3 is supported by the anchor block 9 to generate the braking force of the parking brake. Again, the drum brake device functions as a duo-servo type in which both brake shoos 2, 3 have a self-servo function.

In this manner, the upper portion of the first brake shoe 2 forces the lining 6 against the brake drum. As is apparent, the two brake shoes 2, 3 do not separate from the anchor block 9 until the brake drum rotates, when either the service brake or the parking brake is applied. The effect is the same when both brakes are applied simultaneously. Consequently, the second respective ends 2b, 3b of the brake shoes 2, 3 do not collide with the anchor block 9 to generate noise. In addition, no substantial impact load arises against the anchor block 9.

Also, the second ends 2b, 3b of the brake shoes 2, 3 are supported by the anchor block 9 thereby maintaining the stable operation regardless of a vehicle in motion, even when the brake lever 17 is set in a slightly pulled position by adjusting the parking brake cable (not shown).

As also shown in Fig. 1, an automatic shoe clearance adjustment means are provided which include an adjustment lever 25 pivoted about a pin 24 and an adjustment spring 26 mounted to bias the adjustment lever 25.

The adjustment spring 26 is mounted at one end to the web 5 of the first brake shoe 2. As will be discussed below, when the service brake is applied and the first brake shoe 2 opens, this mechanism also serves to constrain the movement of the idler link 11 to be together with the movement of the first brake shoe 2.

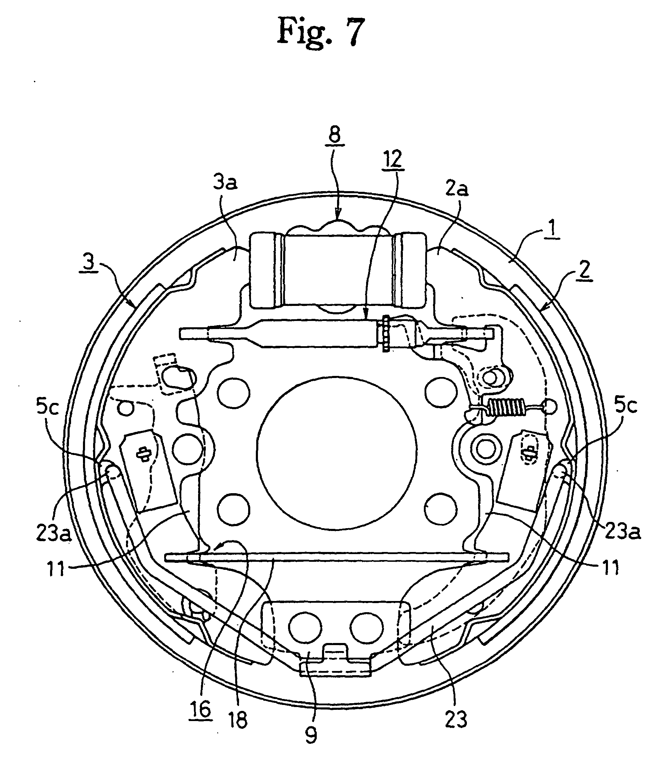

Turning to a modified example (Example 2), Fig. 7 shows a modified drum brake device, where components similar to Example 1 are identified with the same reference numerals. The return springs 21, 22 of Example 1 are replaced by a single wire spring 23 formed in the shape of a slightly obtuse U. The wire spring 23 is fairly thick compared to the wire used for the return springs 21, 22. A central portion of the wire spring 23 is secured to the anchor block 9, while the two free ends 23a engage with the two brake shoes 2, 3 respectively. The ends 23a are bent so as to firmly latch into holes 5c bored in both the brake shoes 2 and 3.

The holes 5c define the point of application of the return force applied by the U-shaped wire spring 23.

This point lies offset from the central region of the respective brake shoes 2, 3 in the direction toward the anchor block 9. This point of application of return force is important for the braking action caused when the brake is applied. Namely, with this arrangement of the wire spring 23, the first ends 2a, 3a of the brake shoes 2, 3 will open when the parking brake is applied. As in Example 1, the second ends 2b, 3b of the brake shoes 2, 3 are urged to maintain contact with the anchor block 9.

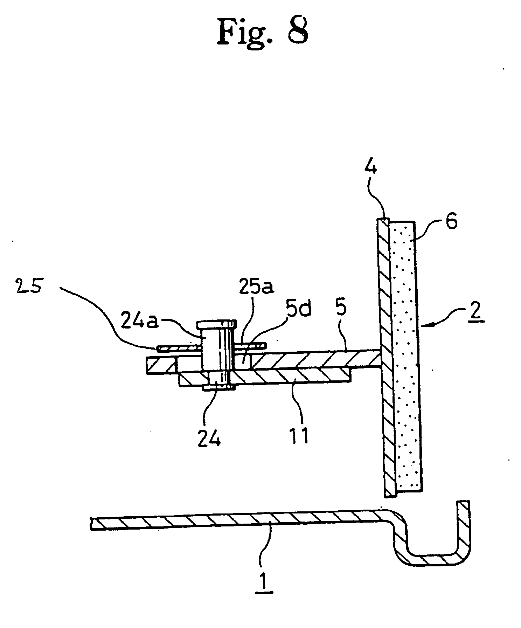

In a further modified example (Example 3), the drum brake device of the present invention is provided with an automatic clearance adjustment function. This function can be employed in any of the examples discussed above, particularly Example 1 of Figs. 1 and 3. As shown in Fig. 8, the adjustment lever 25 is pivotally mounted to the idler link 11 by means of the pin 24. Furthermore, a stem component 24a extends through an elongate hole 5d bored in the shoe web 5 of the first brake shoe 2. The adjustment lever 25 lies above the shoe web 5 as seen in Fig. 1 and also has a hole 25a for pivotal engagement with the stem component 24a. As seen in Fig. 1, an arm 25b of the adjustment lever 25 abuts against a stepped face 15b of the notch groove 15a at the end of the shoe clearance adjustment device 12 (Fig. 3). The other arm 25c of the adjustment lever 25 is disposed to engage with the toothed adjustment wheel 13a of the bolt 13. In an alternative arrangement, the pin 24 can be secured to the shoe web 5 instead of the idler link 11 whereby the adjustment lever 25 still pivots about the stem component 24a. As also seen in Fig. 1, the adjustment spring 26 is mounted between a third arm 25d of the adjustment lever 25 and the shoe web 5. The spring 26 urges the adjustment lever 25 to rotate in the counter-clockwise direction as seen in Fig. 1 about the pin 24.

The operation of the automatic shoe clearance adjustment will now be explained. When the service brake is applied and the two brake shoes 2, 3 spread open to the outside, the shoe clearance adjustment device 12 trails the second brake shoe 3. On the other hand, the idler link 11 would trail the first brake shoe 2. However the link 11 receives the force of the adjustment spring 26, which turns it clockwise as shown in Fig. 1 about the pivot member (protuberance 11a). As a result the other arm 25c of the adjustment lever 25 is turned counter-clockwise with the pin 24 as a fulcrum by an amount equal to the angle with respect to the pin 24 defined by the movement of the pin 24 and the shoe clearance adjustment device 12.

As the linings 6 of the brake shoes 2, 3 become thinner due to wear, the degree of rotation of the other arm 25c will exceed the tooth pitch of the toothed adjustment wheel 13a. When this occurs, the bolt 13 will be rotated by the arm 25c to be screwed out of the sleeve 14 as seen in Fig. 3. This mechanism automatically adjusts the gap between the brake drum and the linings 6 to maintain a substantially constant clearance.

When the parking brake is applied, the shoe clearance adjustment device 12, one notched groove side of the idler link 11, the adjustment lever 25 and other components all trail together with the second brake shoe 3 by the amount it is open.

However, the pin 24 is freely movable in the elongate hole 5d of the first brake shoe 2, such that no effect on the adjustment lever 25 results. The automatic adjustment action will not be less than the movement of the adjustment lever 25 when the service brake is applied. In this Example 3, the force of the adjustment spring 26 always acts to tension the idler link 11 such that its lower end face 11e remains abutted against the anchor block 9, even when the brake is released so that the link 11 will not vibrate. The advantage of the present automatic adjustment can also be realized in Example 2 with one return spring as indicated in Fig. 7.

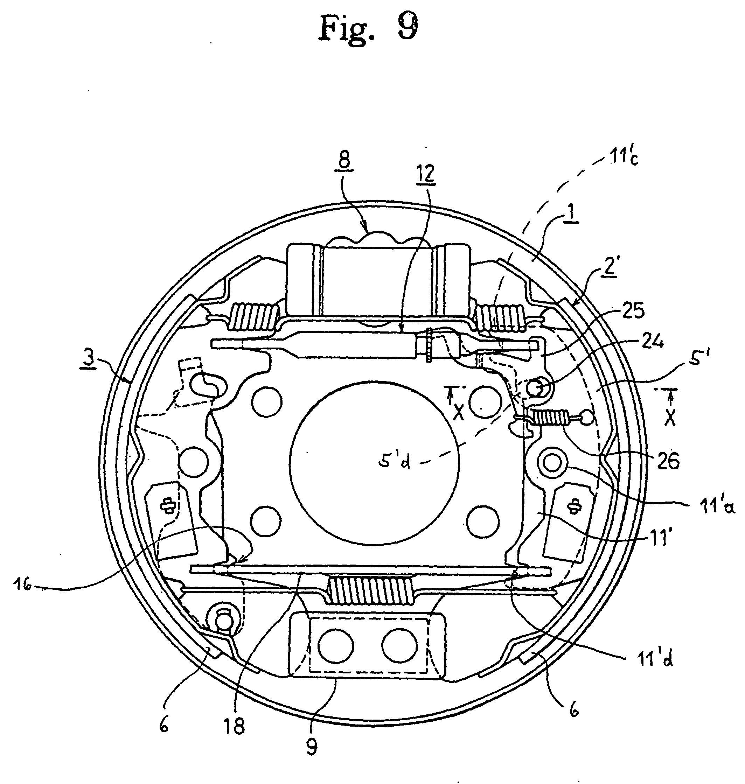

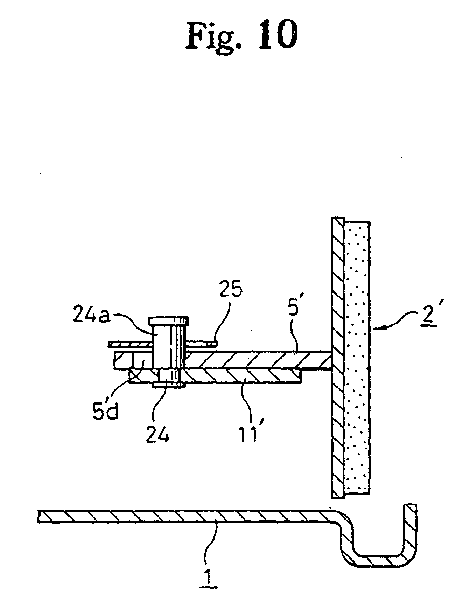

As described in the above first embodiment, if the idler link 11 moves together with the first brake shoe 2, it is obvious to achieve the desired function, e.g. the automatic shoe clearance adjustment function. A configuration related to a second embodiment will now be discussed in conjunction with Example 4 of Figs. 9 and 10. Those components which differ from the above first embodiment (Figs. 1 and 8) are marked with an apostrophe. In the first embodiment, the lower end face 11e of the idler link 11 abuts against the anchor block 9 as shown in Fig. 1 and Fig. 7. In the present second embodiment shown in Fig. 10 in detail, an idler link 11' does not abut against the anchor block 9. The urging force of the adjustment spring 26 also keeps the brake outer side of the stem component 24a of the pin 24 abutted against the inner circumferential surface of an elongate hole 5'd formed in the shoe web 5' of a first brake shoe 2' via the adjustment spring 25. The braking operation and automatic adjustment action provided by this Example 4 are the same as in the above Example 3 and an explanation is omitted.

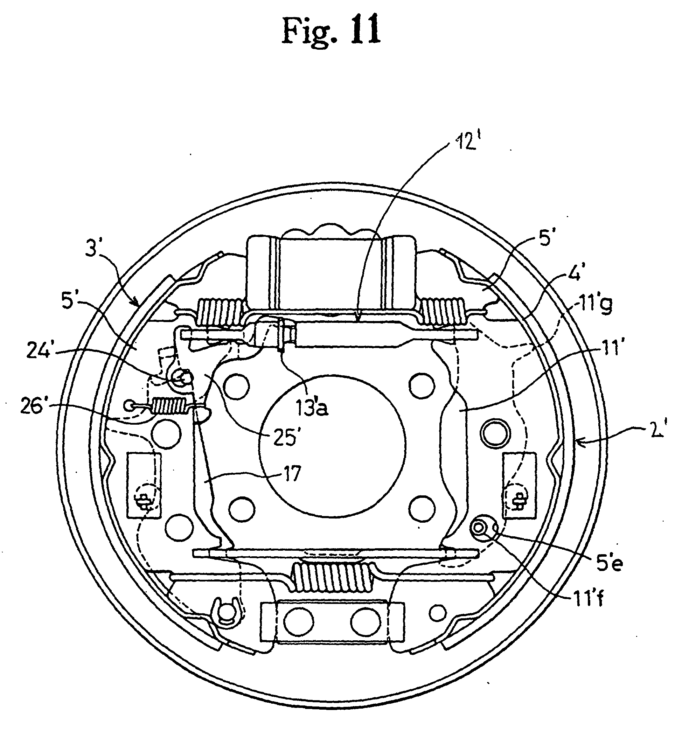

Modified examples of the second embodiment are described in the right half of Fig. 11, and then the same function of controlling movement of the idler link 11' can be obtained by providing a second protuberance 11'f at the second end of the link 11' which abuts against the brake inner side of the large diameter hole 5'e formed in the shoe web 5'. Alternatively, a projection 11'g can be provided on the idler link 11', the projection engageable with an inner surface of the shoe rim 4'. Important for the invention is that when the service brake is applied, the link 11' moves together with the first brake shoe 2' and that when the parking brake is applied, the link 11' and the first brake shoe 2' turn relative to one another. As will be apparent from the above modifications, even when the brake lining wears with time, the link 11', adjustment lever 25 and adjustment spring 26 (both not show in the right half of Fig. 11, and an adjustment lever 25' and an adjustment spring 26' of later-described Example 5 are shown in the left half) move substantially together with the first brake shoe 2'. In addition, no adverse influence occur on the automatic adjustment action and a stable reliable adjustment is possible over a prolonged period of time.

A further modified example (Example 5) relating to a modified automatic shoe clearance adjustment mechanism is shown in the left half of Fig. 11. This Example 5 provides common movement of the link 11' and the brake shoe 2' by means of the mechanism 11'f and 5'e or by means of the mechanism 11'g and 4'. In contrast to Example 3 (Fig. 8), the present arrangement provides an adjustment lever 25' on a second brake shoe 3'. In effect, this arrangement is mirror symmetrical to that of Fig. 9 with respect to the automatic shoe clearance adjustment mechanism. The pin 24' is planted on the shoe web 5' of the second brake shoe 3'. The adjustment lever 25' is constantly urged in the clockwise direction by an adjustment spring 26'. The action of automatic adjustment in this Example 5 is the same as that in Example 3 (Fig. 8) and will not be repeated here. The engaging position of the adjustment lever 25' with an adjustment wheel 13'a of a shoe clearance adjustment device 12' does not change even if the brake lever 17 is set with only a slight pull. No impairment of the adjustment function therefore arises.

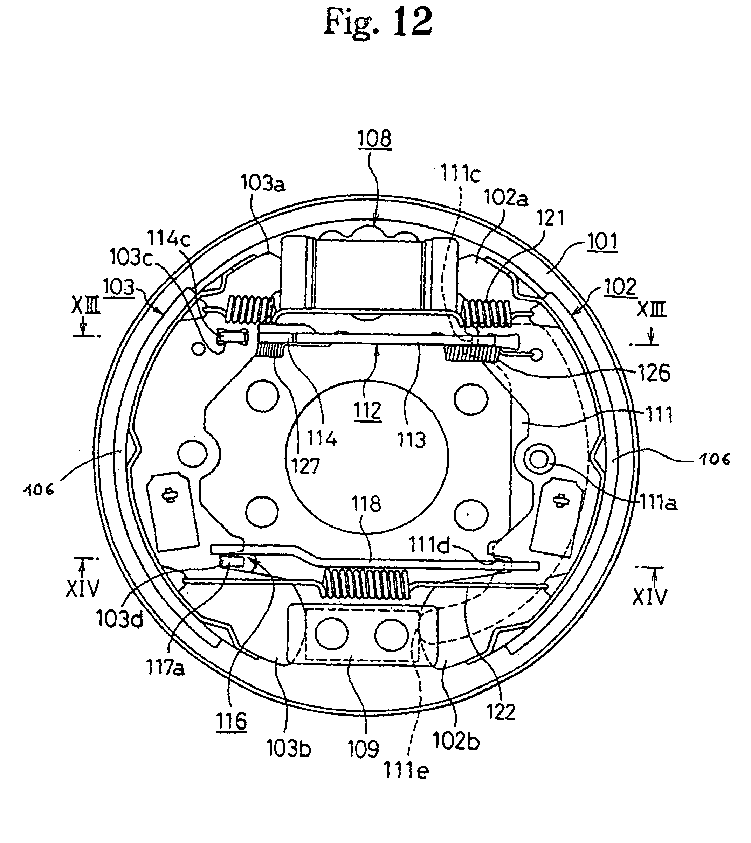

A further modified example (Example 6) of the present drum brake device described in first embodiment will now be discussed in conjunction with Figs. 12 to 14. The same components having the same function as in the previous examples are identified with like reference numerals in the 100-series. This Example 6 is equipped with a one-shot type automatic shoe clearance adjustment device and a cross-pull type mechanism for the parking brake. As seen in Fig. 12, the brake device comprises a back plate 101, two brake shoes 102, 103 with a pair of first ends 102a, 103a and a pair of second ends 102b, 103b.

Further included are an actuator 108, an anchor block 109, an idler link 111 with a pivot member 111a, a notched groove 111c, 111d at either end of the link 111 and a lower end face 111e of the link 111, an first return spring 121 and a second return spring 122. The return force of the second return spring 122 in its mounted state is such that when the parking brake is applied, the second ends 102b, 103b of the brake shoes 102, 103 do not pull away from the anchor block 109. As with the first embodiment of Fig. 1, the mounted loads of the first and second return springs 121, 122 are selected such that when the parking brake is applied, the second ends 102b, 103b of the brake shoes 102, 103 do not spread open.

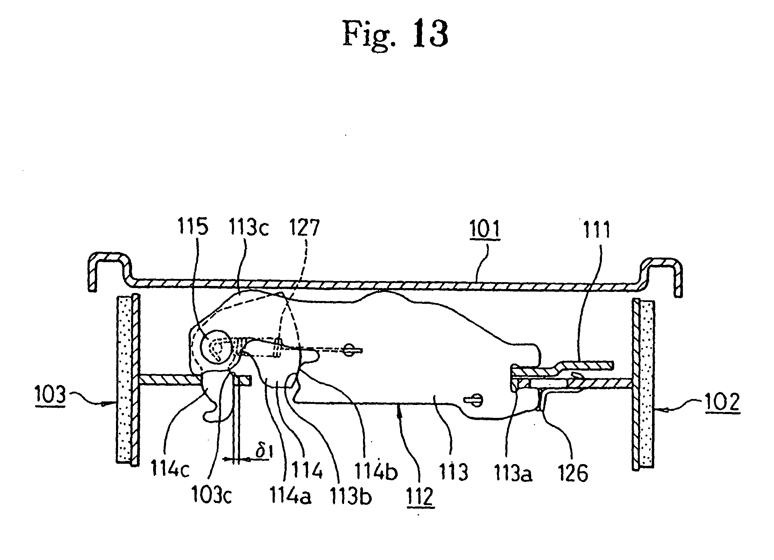

The shoe clearance adjustment device 112, best seen in Fig. 13, comprises a plate member 113, a bell crank lever 114, as well as two spring members 126, 127. The bottom of the notched groove 113a formed at one end of the plate member 113 engages with the bottom of the notched groove 111c at the end of the idler link 111 as seen in Fig. 13. A toothed portion 113b is formed at a central section of the plate member 113.

The middle segment of the bell crank lever 114 is supported by the stem of a pin 115 so as to pivot on the other end 113c of the plate member 113 and to move lengthwise along the plate face of the plate member 113 as shown in Fig. 13. A fan-shaped arm 114a of the bell crank lever 114 has a toothed portion 114b formed in its outer perimeter, which meshes with the toothed portion 113b of the plate member 113. Another arm 114c of the bell crank lever 114 is provided with a cam surface having a clearance δ1 within a rectangular hole 103c formed in the second brake shoe 103 as shown in Fig. 13.

The adjustment spring 126 is disposed between the first brake shoe 102 and the plate member 113, while the second spring 127 is disposed between the plate member 113 and the pin 115.

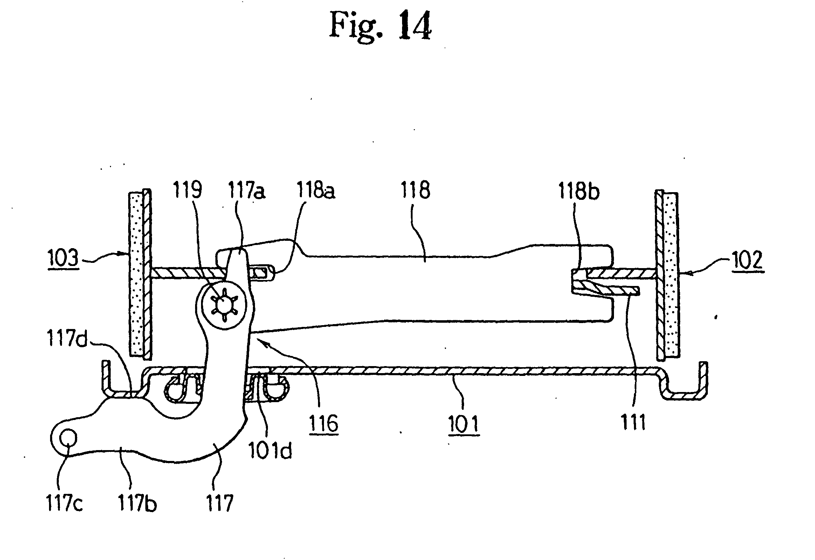

Referring to Fig. 14, a cross-pull type actuator 116, activated by the parking brake, comprises a brake lever 117 and a strut 118. A finger-shaped portion 117a of the brake lever 117 engages against the bottom of the notched groove 103d formed on the second end 103b of the second brake shoe 103. The arm 117b on the other end of the brake lever 117 penetrates freely through a hole 101d formed in the back plate 101. A mounting hole 117c is provided for connecting the parking brake cable (not shown), the hole 117c being bored on an end of the arm 117b. A stop 117d is also formed on the brake lever 117, which abuts against the reverse side of the back plate 101 to regulate the return stop position of the lever 117.

The strut 118 has a notched groove 118a as shown in Fig. 14, in which the second end of the second brake shoe 103 passes. The brake lever 117 is also pivotable about a pin 119 as shown in Fig. 14. Another notch groove 118b of the strut 118, includes the notched groove 111d at one end of the idler link 111 and one brake shoe 102.

The operation of this Example 6 will now be explained. The main difference from the Example 1 of Fig. 1 is the brake lever 117 is now of the cross-pull type. When the brake lever 117 is pulled via the parking brake cable, the brake lever 117 is urged against the strut 118 by means of the pin 119, which is pivotally mounted to the strut 118. The generated force is transmitted in sequence to the idler link 111, the shoe clearance adjustment device 112 and finally to the second brake shoe 103 via the rectangular hole 103c as seen in Fig. 12. The first end 103a of the second brake shoe 103 opens, while the other second end 103b rests against the anchor block 109. The movement causes engagement of the lining of the second brake shoe 103 with the brake drum.

At the same time, the generated force applied to the idler link 111 urges the first brake shoe 102 outwardly due to the engagement of the link 111 with the plate member 113. This causes the first end 102a of the first brake shoe 102 to move outwardly, whereby the second end 102b is engaged with the anchor block 9.

From the above it is apparent that the movement of the two brake shoes 102 and 103 is the same as that for the previous example, whereby the same technical effect is achieved.

Again referring to Fig. 12, when the service brake is applied, the two brake shoes 102, 103 are urged outwardly. The shoe clearance adjustment device 112 experiences the greater return force of the adjustment spring 126 and therefore follows the first brake shoe 102. As the linings become worn out, the amount by which the shoes have opened eventually exceeds a value represented by the sum of the clearance δ1 of the bell crank lever 114 (Fig. 13) and the height of the toothed portion 114b. The bell crank lever 114 then turns in the counter clockwise direction with the pin 115 as a fulcrum as shown in Fig. 13 by an amount equivalent to one tooth pitch on the toothed portions 113b and 114b. In this manner, the clearance for the brake shoes is set automatically.

When the parking brake is applied, the plate member 113 and the bell crank lever 114 move together with the second brake shoe 103 to the left as seen in Fig. 12. The adjustment spring 126 extends to move the first brake shoe 102 to the right, whereby there is no effect on the automatic shoe clearance adjustment mechanism.

The present invention has been explained by the above description of examples, however is not limited thereto. For example, an incremental type automatic shoe clearance adjustment device as shown in Fig. 1 can be combined with the cross-pull type parking brake. In addition, the one-shot type as discussed in conjunction with Fig. 12 can be combined with a forward-pull type of parking brake shown in Fig. 1. Other modifications include superimposing the idler link on that side of the shoe web on which the brake drum is mounted.

## Claims

1. A drum brake device, comprising:
- first and second brake shoes (2', 3) disposed opposite one another on a back plate (1);
- a service brake actuator (8) disposed between a first pair of adjacent ends of the brake shoes (2', 3);
- an anchor block (9) disposed between a second pair of adjacent ends of the brake shoes (2', 3);
- a shoe clearance adjustment device (12) arranged adjacent to the service brake actuator (8) and disposed between the brake shoes (2', 3);
- parking brake actuator means (16) disposed adjacent to the anchor block (9);
- an idler link (11) pivotally mounted at a central region of the first brake shoe (2');
- an automatic shoe clearance adjustment mechanism (24, 25, 26), including a resilient means (26) stretched between the idler link (11') and the first brake shoe (2), provided to automatically adjust the length of the shoe clearance adjustment device (12);
wherein the first end and the second end of the idler link (11') are functionally engaging with the shoe clearance adjustment device (12) and the parking brake actuator means (16), respectively, wherein the resilient means (26) is provided so that a torque with a pivotal component of the idler link (11') as the fulcrum is imparted to the idler link (11') in the same direction as the first brake shoe spreading open with the anchor block (9) as the fulcrum,
**characterized in that** a mechanism (24, 5'd) to regulate the rotation of the idler link (11') relative to the first brake shoe, caused by the resilient means (26), is provided between the idler link (11') and the first brake shoe (2') thereby moving the idler link (11') together with the first brake shoe (2') by keeping the idler link (11') and the first brake shoe (2') in the same relative position when the service brake actuator (8) is operated.

2. The drum brake device according to claim 1, **characterized in that**
first and second shoe return springs (21, 22) are provided to urge the brake shoes (2', 3) toward one another, and the force urging the second adjacent ends of the brake shoes (2', 3) toward one another is greater than the force urging the first adjacent ends of the brake shoes (2', 3) toward one another.

3. The drum brake device according to claim 1, **characterized in that**
a single shoe return spring (23) is provided to urge the brake shoes (2', 3) toward one another, and the force urging the second adjacent ends of the brake shoes (2', 3) toward one another is greater than the force urging the first adjacent ends of the brake shoes (2', 3) toward one another.

4. The drum brake device according to claim 2, **characterized in that** the amount of the torque applied to the second adjacent ends of the brake shoes (2', 3) which is adjusted by arranging the force (F1) of the second shoe return spring (22) and the distance (L1) from the pivotal mount (11'a) of the brake shoe (2') to the second return spring (22) is greater than the torque applied to the first adjacent ends of the brake shoes (2', 3) which is adjusted by arranging the force (F2) of the first shoe return spring (21) and the distance (L2) from the pivotal mount (11'a) of the brake shoe (2') to the first return spring (21).

5. The drum brake device according to claim 1, **characterized in that** the automatic shoe clearance adjustment mechanism is comprised of a pin (24) planted on the idler link (11'), **in that** an opening (5'd) through which the pin (24) penetrates is formed in a web (5') of the first brake shoe (2'), and **in that** the rotation of the idler link (11') caused by the resilient means (26) is regulated by the mechanism that the pin (24) is abutting against an inner circumferential surface of the hole (5'd).

## Patentansprüche

1. Trommelbremse, umfassend:
- erste und zweite Bremsschuhe (2', 3), die einander gegenüberliegend auf einer Montageplatte (1) angeordnet sind;
- ein Betriebsbremsen-Stellglied (8), das zwischen einem ersten Paar benachbarter Enden der Bremsschuhe (2', 3) angeordnet ist;
- einen Ankerklotz (9), der zwischen einem zweiten Paar benachbarter Enden der Bremsschuhe (2', 3) angeordnet ist;
- eine Vorrichtung (12) zum Nachstellen des Bremsschuhabstands, die benachbart zu dem Betriebsbremsen-Stellglied (8) eingerichtet und zwischen den Bremsschuhen (2', 3) angeordnet ist;
- Feststellbremsen-Stellmittel (16), die benachbart zu dem Ankerklotz (9) angeordnet sind;
- ein Laufrollenverbindungsstück (11'), das schwenkbar in einem Mittelbereich des ersten Bremsschuhs (2') angebracht ist;
- eine Automatik (24, 25, 26) zum Nachstellen des Bremsschuhabstands, umfassend elastische Mittel (26), die zwischen dem Laufrollenverbindungsstück (11') und dem ersten Bremsschuh (2) gespannt sind, die bereitgestellt wird, um die Länge der Vorrichtung (12) zum Nachstellen des Bremsschuhabstands automatisch nachzustellen;
wobei das erste Ende und das zweite Ende des Laufrollenverbindungsstücks (11') funktionsmäßig jeweils in die Vorrichtung (12) zum Nachstellen des Bremsschuhabstands und die Feststellbremsen-Stellmittel (16) eingreifen, wobei die elastischen Mittel (26) derart bereitgestellt werden, dass ein Drehmoment mit einer Schwenkkomponente des Laufrollenverbindungsstücks (11') als Hebelpunkt auf das Laufrollenverbindungsstück (11') in dieselbe Richtung übertragen wird, in die sich der erste Bremsschuh mit dem Ankerklotz (9) als Hebelpunkt ausbreitet,
**dadurch gekennzeichnet, dass** ein Mechanismus (24, 5'd) zum Regulieren der Drehung des Laufrollenverbindungsstücks (11') im Verhältnis zu dem ersten Bremsschuh, die durch die elastischen Mittel (26) verursacht wird, zwischen dem Laufrollenverbindungsstück (11') und dem ersten Bremsschuh (2') bereitgestellt wird, wodurch das Laufrollenverbindungsstück (11') zusammen mit dem ersten Bremsschuh (2') bewegt wird, indem das Laufrollenverbindungsstück (11') und der erste Bremsschuh (2') in der gleichen relativen Stellung gehalten werden, wenn das Betriebsbremsen-Stellglied (8) betätigt wird.

2. Trommelbremse nach Anspruch 1, **dadurch gekennzeichnet, dass** erste und zweite Bremsschuh-Rückstellfedern (21, 22) bereitgestellt werden, um die Bremsschuhe (2', 3) aufeinander zu zu drücken, und die Kraft, welche die zweiten benachbarten Enden der Bremsschuhe (2', 3) aufeinander zu drückt, größer ist als die Kraft, welche die ersten benachbarten Enden der Bremsschuhe (2', 3) aufeinander zu drückt.

3. Trommelbremse nach Anspruch 1, **dadurch gekennzeichnet, dass** eine einzelne Bremsschuh-Rückstellfeder (22) bereitgestellt wird, um die Bremsschuhe (2', 3) aufeinander zu zu drücken, und die Kraft, welche die zweiten benachbarten Enden der Bremsschuhe (2', 3) aufeinander zu drückt, größer ist als die Kraft, welche die ersten benachbarten Enden der Bremsschuhe (2', 3) aufeinander zu drückt.

4. Trommelbremse nach Anspruch 2, **dadurch gekennzeichnet, dass** der Betrag des auf die zweiten benachbarten Enden der Bremsschuhe (2', 3) ausgeübten Drehmoments, das eingestellt wird, indem die Kraft (F1) der zweiten Bremsschuh-Rückstellfeder (22) und der Abstand (L1) von dem Angelpunkt (11'a) des Bremsschuhs (2') zu der zweiten Rückstellfeder (22) geregelt werden, größer ist als das Drehmoment, das auf die ersten benachbarten Enden der Bremsschuhe (2', 3) ausgeübt wird, das eingestellt wird, indem die Kraft (F2) der ersten Bremsschuh-Rückstellfeder (21) und der Abstand (L2) von dem Angelpunkt (11'a) des Bremsschuhs (2') zu der ersten Rückstellfeder (21) geregelt werden.

5. Trommelbremse nach Anspruch 1, **dadurch gekennzeichnet, dass** die Automatik (24, 25, 26) zum Nachstellen des Bremsschuhabstands aus einem Stift (24) besteht, der auf dem Laufrollenverbindungsstück (11') aufgesetzt ist, dass eine Öffnung (5'd), durch die der Stift (24) eindringt, in einem Steg (5') des ersten Bremsschuhs (2') gebildet ist, und dass die Drehung des Laufrollenverbindungsstücks (11'), die durch die elastischen Mittel (26) verursacht wird, von dem Mechanismus reguliert wird, den der Stift (24) an eine innere Umfangsfläche des Lochs (5'd) anstoßen lässt.

## Revendications

1. Frein à tambour comprenant :
une première et une seconde mâchoires de frein (2', 3) disposées à l'opposé l'une de l'autre sur un plateau de frein (1) ;
un actionneur de frein de service (8) disposé entre une première paire d'extrémités adjacentes des mâchoires de frein (2', 3) ;
un bloc d'ancrage (9) disposé entre une seconde paire d'extrémités adjacentes des mâchoires de frein (2', 3) ;
un dispositif de réglage de jeu de mâchoire (12) agencé à côté de l'actionneur de frein de service (8) et disposé entre les mâchoires de frein (2', 3) ;
des moyens d'actionnement de frein de stationnement (16) disposés à côté du bloc d'ancrage (9) ;
une articulation à pignon intermédiaire (11') montée de manière pivotante au niveau d'une région centrale de la première mâchoire de frein (2') ;
un mécanisme de réglage de jeu de mâchoire automatique (24, 25, 26), comprenant des moyens élastiques (26) étirés entre l'articulation à pignon intermédiaire (11') et la première mâchoire de frein (2), prévu pour régler automatiquement la longueur du dispositif de réglage de jeu de mâchoire (12) ;
dans lequel la première extrémité et la seconde extrémité de l'articulation à pignon intermédiaire (11') viennent fonctionnellement en prise avec le dispositif de réglage de jeu de mâchoire (12) et les moyens d'actionnement de frein de stationnement (16), respectivement, dans lequel les moyens élastiques (26) sont prévus afin qu'un couple avec un composant pivotant de l'articulation à pignon intermédiaire (11') comme pivot soit imparti à l'articulation à pignon intermédiaire (11') dans la même direction que la première mâchoire de frein s'ouvrant avec le bloc d'ancrage (9) comme pivot,
**caractérisé en ce qu'**un mécanisme (24, 5'd) pour réguler la rotation de l'articulation à pignon intermédiaire (11') par rapport à la première mâchoire de frein, causée par les moyens élastiques (26), est prévu entre l'articulation à pignon intermédiaire (11') et la première mâchoire de frein (2'), déplaçant ainsi l'articulation à pignon intermédiaire (11') avec la première mâchoire de frein (2') en maintenant l'articulation à pignon intermédiaire (11') et la première mâchoire de frein (2') dans la même position relative lorsque l'actionneur de frein de service (8) est actionné.

2. Frein à tambour selon la revendication 1, **caractérisé en ce que** des premier et second ressorts de retour de mâchoire (21, 22) sont prévus pour pousser les mâchoires de frein (2', 3) l'une vers l'autre, et la force poussant les secondes extrémités adjacentes des mâchoires de frein (2', 3) l'une vers l'autre est supérieure à la force poussant les premières extrémités adjacentes des mâchoires de frein (2', 3) l'une vers l'autre.

3. Frein à tambour selon la revendication 1, **caractérisé en ce qu'**un seul ressort de retour de mâchoire (23) est prévu pour pousser les mâchoires de frein (2', 3) l'une vers l'autre, et la force poussant les secondes extrémités adjacentes des mâchoires de frein (2', 3) l'une vers l'autre est supérieure à la force poussant les premières extrémités adjacentes des mâchoires de frein (2', 3) l'une vers l'autre.

4. Frein à tambour selon la revendication 2, **caractérisé en ce que** la quantité du couple appliqué aux secondes extrémités adjacentes des mâchoires de frein (2', 3) qui est ajustée en agençant la force (F1) du second ressort de retour de mâchoire (22) et la distance (L1) entre l'élément de montage pivotant (11'a) de la mâchoire de frein (2') et le second ressort de retour (22) est supérieure au couple appliqué aux premières extrémités adjacentes des mâchoires de frein (2', 3) qui est ajusté en agençant la force (F2) du premier ressort de retour de mâchoire (21) et la distance (L2) entre l'élément de montage pivotant (11'a) de la mâchoire de frein (2') et le premier ressort de retour (21).

5. Frein à tambour selon la revendication 1, **caractérisé en ce que** le mécanisme de réglage de jeu de mâchoire automatique est composé d'une broche (24) plantée sur l'articulation à pignon intermédiaire (11'), **en ce qu'**une ouverture (5'd) à travers laquelle la broche (24) pénètre est formée dans une âme (5') de la première mâchoire de frein (2), et **en ce que** la rotation de l'articulation à pignon intermédiaire (11') causée par les moyens élastiques (26) est régulée par le mécanisme selon lequel la broche (24) vient en butée contre une surface circonférentielle interne du trou (5'd).
